# EUROPEAN PATENT APPLICATION

(11) **EP 4 773 270 A1**
(43) Date of publication of application: **08.07.2026**
(21) Application number: 24876236.1
(22) Date of filing: 13.08.2024
(51) Int. Cl.: H01M 10/04, B65G 47/90, G06K 17/00, B25J 9/02

(54) **BOTTOM SUPPORT APPARATUS, GRABBING DEVICE, PRODUCTION LINE, AND METHOD FOR REPLACING TYPE OF BOTTOM SUPPORT APPARATUS**

(30) Priority: 12.10.2023 CN 202311320714
(71) Applicant: Contemporary Amperex Technology Co., Limited, Ningde, Fujian 352100 (CN)
(72) Inventor: WU, Kai, Ningde, Fujian 352100 (CN); SUN, Zhiqiang, Ningde, Fujian 352100 (CN); GONG, Xueqing, Ningde, Fujian 352100 (CN); SUN, Yanlin, Ningde, Fujian 352100 (CN); CHEN, Fanke, Ningde, Fujian 352100 (CN); ZHAO, Meng, Ningde, Fujian 352100 (CN)
(74) Representative: Ziebig Hengelhaupt Intellectual Property Attorneys Patentanwaltskanzlei PartGmbB
(86) International application number: PCT/CN2024/111811
(87) International publication number: WO 2025/077416

(57) **Abstract**

The present disclosure relates to the technical field of batteries, and provides a bottom support apparatus, a grabbing device, a production line, and a method for replacing the type of a bottom support apparatus. The bottom support apparatus comprises a plurality of mounting units, a bottom support set, and a plurality of type-replacing mechanisms. Each mounting unit comprises two mounting platforms spaced apart along a first direction, and the plurality of mounting units are spaced apart along a second direction. The bottom support set comprises a plurality of bottom support boards. The plurality of bottom support boards are spaced apart along the second direction, and each bottom support board corresponds to the two mounting platforms of one of the mounting units. Two ends of each bottom support board along the first direction are each detachably connected to one of the type-replacing mechanisms. The type-replacing mechanisms are detachably connected to the mounting platforms. The first direction is perpendicular to the second direction.

## Description

### CROSS-REFERENCE TO RELATED APPLICATION

The present disclosure is presented based on Chinese Patent Application No. 202311320714.6, filed on October 12, 2023 and entitled "BOTTOM SUPPORT APPARATUS, GRABBING DEVICE, PRODUCTION LINE, AND METHOD FOR CHANGING BOTTOM SUPPORT APPARATUS TYPE", and claims priority to the Chinese Patent Application, the content of which is incorporated herein by reference in its entirety.

### TECHNICAL FIELD

The present disclosure relates to the technical field of batteries, and in particular, to a bottom support apparatus, a grabbing device, a production line, and a method for changing a bottom support apparatus type.

### BACKGROUND

Battery modules are increasingly widely used in life and industry. For example, new energy vehicles equipped with battery modules have been widely used. In addition, battery modules are also increasingly used in energy storage and other fields. In a new energy vehicle equipped with a battery module, the battery module may be configured to supply power entirely or partially.

During the production and assembly process of a battery module on the production line, the battery module needs to be moved for assembly. Since the battery module has a relatively large mass and is prone to falling off, in the related art, a bottom support plate is configured as a support at the bottom of the battery module to support the bottom of the battery module, thereby preventing the battery module from falling off. However, battery modules of different models usually correspond to different bottom support plates, and it is difficult for one production line to adapt to the mixed-line production of the battery modules of different models.

### SUMMARY

In view of this, embodiments of the present disclosure are intended to provide a bottom support apparatus, a grabbing device, a production line, and a method for changing a bottom support apparatus type, to protect the bottoms of battery modules of different models.

To achieve the above objective, the technical solutions of the embodiments of the present disclosure are implemented as follows:

According to an aspect of the embodiments of the present disclosure, a bottom support apparatus is disclosed. The bottom support apparatus includes:
a plurality of mounting units, where each of the plurality of mounting units includes two mounting stands spaced apart from each other along a first direction, and the plurality of mounting units are spaced apart from each other along a second direction;
a bottom support set, where the bottom support set includes a plurality of bottom support plates, the plurality of bottom support plates are spaced apart from each other along the second direction, and each of the bottom support plates corresponds to two mounting stands of one of the mounting units; and
a plurality of type change mechanisms, where two ends of each of the bottom support plates along the first direction are each detachably connected to one of the type change mechanisms, and the type change mechanism is capable of being detachably connected to the mounting stand, where the first direction is perpendicular to the second direction.

In the above technical solution, the plurality of bottom support plates are spaced apart from each other along the second direction, and each of the plurality of bottom support plates corresponds to two mounting stands of one mounting unit. In this way, the bottom of a battery module can be supported in the first direction and the second direction, thereby preventing a case in which the battery module falls off when being moved. This can protect the battery module assembly to some extent and achieve high safety. Two ends of each of the bottom support plates are each detachably connected to one type change mechanism, and the type change mechanism is detachably connected to the mounting stand. In this way, in the mixed-line production of battery modules of different models, for incoming materials of the battery modules of different models, positions of the type change mechanisms on the mounting stands may be changed to support the bottoms of the battery modules of different models according to the present disclosure; the bottom support set may be replaced to adapt to the battery modules of different models; or the type change mechanism may be connected to a corresponding position and combined with the replacement of different bottom support sets, enabling adaptation to the battery modules of different models, which is convenient and flexible.

In an embodiment, the mounting stand is provided with a plurality of locking positions and/or a plurality of bottom support sets are provided, and the type change mechanism is capable of being detachably connected to the locking position of the mounting stand.

In the above technical solution, in the mixed-line production of battery modules of different models, for the incoming materials of the battery modules of different models, locking positions of the type change mechanisms on the mounting stands may be changed to support the bottoms of the battery modules of different models according to the present disclosure; different bottom support sets may be replaced to adapt to the battery modules of different models; or the type change mechanism may be connected to a corresponding locking position and combined with the replacement of different bottom support sets, enabling adaptation to the battery modules of different models, which is convenient and flexible.

In an embodiment, the plurality of locking positions are spaced apart from each other along an upper-lower direction.

In the above technical solution, the type change mechanism is connected to the corresponding locking position, to adapt to the battery modules of different heights along the upper-lower direction.

In an embodiment, the type change mechanism includes a first locking member and an adjusting member, a first locking hole is formed on the adjusting member, a first mating hole is formed on the mounting stand at the locking position, and the first locking member is provided in the first locking hole and the first mating hole in a penetrating manner to detachably connect the adjusting member to the locking position.

In the above technical solution, the detachable connection is achieved by using the first locking member, the first locking hole, and the first mating hole, so that the structure is simple and easy to implement.

In an embodiment, the first locking member is a pin, the first locking hole and the first mating hole both extend along the second direction, and the first locking member is inserted into the first locking hole and the first mating hole along the second direction.

In the above technical solution, by pulling the pin along the second direction, the pin is pulled out of the first locking hole and the first mating hole at the current locking position, and then the type change mechanism and the bottom support plate connected to the type change mechanism are synchronously moved along the upper-lower direction to the first mating hole at a corresponding locking position. Subsequently, the pin may be inserted into the first locking hole and the first mating hole at the corresponding locking position. In this way, by inserting and pulling out the pin, the rapid type change can be achieved without stopping the line, adapting to the battery modules of different heights along the upper-lower direction, with high efficiency and low cost.

In an embodiment, the type change mechanism includes a second locking member and the adjusting member, a second locking hole is formed on the adjusting member, a second mating hole is formed on one end of the bottom support plate along the upper-lower direction, and the second locking member is provided in the second locking hole and the second mating hole in a penetrating manner to detachably connect the bottom support plate to the adjusting member.

In the above technical solution, when the bottom support plate needs to be replaced to adapt to the battery modules of different models, a corresponding bottom support plate may be first determined, then the second locking member is disengaged from the second locking hole and the second mating hole on the current bottom support plate, and the current bottom support plate is removed and replaced with the corresponding bottom support plate. Finally, the second locking member is provided in the second locking hole and the second mating hole on the corresponding bottom support plate in a penetrating manner. In this way, the bottom support plate can be replaced quickly, thereby achieving high efficiency.

In an embodiment, the second locking member is a pin, the second locking hole and the second mating hole both extend along the upper-lower direction, and the second locking member is inserted into the second locking hole and the second mating hole from top to bottom.

In the above technical solution, when the bottom support plate needs to be replaced, by pulling the pin upwards, the pin may be pulled out of the second locking hole and the second mating hole on the current bottom support plate, and then the current bottom support plate is removed and replaced with a corresponding bottom support plate. Finally, the pin is inserted downwards into the second locking hole and the second mating hole on the corresponding bottom support plate. In this way, by inserting and pulling out the pin, the rapid type change can be achieved without stopping the line, adapting to the battery modules of different models, with high efficiency.

In an embodiment, a limiting groove is formed on the adjusting member, an end part of the bottom support plate along the first direction is configured as a limiting part provided with the second mating hole, the limiting part is located within the limiting groove and abuts against a lower surface of the limiting groove, and the second locking hole is located above the limiting groove and is in communication with the limiting groove.

In the above technical solution, when the bottom support plate needs to be replaced, the pin may be pulled out upwards, and then the limiting part on the current bottom support plate is taken out from the limiting groove. Subsequently, the limiting part on a corresponding bottom support plate is placed in the limiting groove, thereby completing the pre-mounting and pre-positioning of the bottom support plate. In this way, in one aspect, the limiting groove and the limiting part can achieve precise positioning during the connection process, such that offsets or misalignments are prevented, and the pin can be aligned with and inserted into the second mating hole more easily, thereby reducing the time for replacing the bottom support plate, and achieving the rapid type change of the bottom support plate; in another aspect, the limiting fit between the limiting groove and the limiting part can provide additional support and fixation, thereby reducing the problem of loosening or swinging of the bottom support plate when supporting the bottom of a battery module, and achieving high operation stability.

In an embodiment, a mounting port in communication with the limiting groove is formed on one side surface of the adjusting member along the second direction, and the limiting part enters the limiting groove along the second direction through the mounting port.

In the above technical solution, when the bottom support plate needs to be replaced, the limiting part may be inserted into the limiting groove from the mounting port in a guiding manner, and after the limiting part is inserted in place, the second mating hole is aligned with the second locking hole and the pin. In this case, the pin can be directly inserted into the second mating hole to complete the mounting of the bottom support plate, so that the replacement speed of the bottom support plate is further increased, achieving high efficiency.

In an embodiment, the bottom support apparatus includes a reader-writer and an electronic tag, the reader-writer is disposed in the type change mechanism, the electronic tag is disposed in the bottom support plate, and the reader-writer is capable of sensing and identifying the electronic tag.

In the above technical solution, when the limiting part on the bottom support plate is inserted into the limiting groove, the reader-writer can identify the electronic tag in the limiting part, to determine the model of the bottom support plate. In this way, the safety detection for replacing the bottom support plate can be achieved, thereby preventing incorrect changes, and improving the accuracy for replacing the bottom support plate.

In an embodiment, the bottom support apparatus includes a position detecting member, the position detecting member is disposed on the mounting stand, and the position detecting member is configured to detect the locking position at which the type change mechanism is located.

In the above technical solution, by the position detecting member, the safety detection for the type change for bottom supporting can be achieved, thereby preventing incorrect changes, and improving the accuracy of the type change for bottom supporting.

According to another aspect of the embodiments of the present disclosure, a grabbing device is disclosed. The grabbing device includes a gripper and the bottom support apparatus according to any one of the above embodiments, where the gripper is configured to be capable of grabbing or releasing a battery module, and the bottom support apparatus is capable of supporting a bottom of the battery module in a state where the gripper grabs the battery module.

According to still another aspect of the embodiments of the present disclosure, a production line for producing batteries is disclosed. The production line includes the grabbing device according to the above embodiments.

According to yet another aspect of the embodiments of the present disclosure, a method for changing a bottom support apparatus type is disclosed, with the bottom support apparatus according to above embodiments. The method is applied to a control device and includes:
reading, by a reader-writer, a first product type recorded in an electronic tag, in response to completion of a type change of the bottom support apparatus, where the electronic tag is disposed on a bottom support set of the bottom support apparatus, and the reader-writer is disposed on a type change mechanism of the bottom support apparatus;
comparing the first product type read from a manufacturing execution system server with an acquired second product type; and
outputting first alarm information in response to an inconsistency between the read first product type and the acquired second product type, where the first alarm information is used for requesting a type change of the bottom support apparatus.

In an embodiment, the method further includes:
acquiring a position detection result sent by a position detecting member, where the position detecting member is disposed on a mounting stand of a bottom support structure, and the position detection result is used for indicating whether the bottom support apparatus is located at a preset position;
outputting second alarm information in response to indication based on the position detection result that the bottom support apparatus is not located at the preset position, where the second alarm information is used for requesting a reset of the bottom support apparatus; and
outputting third reminder information in response to indication based on the position detection result that the bottom support apparatus is located at the preset position, where the third reminder information is used as a reminder for manual replacement of the bottom support apparatus.

### BRIEF DESCRIPTION OF THE DRAWINGS

FIG. 1 is a schematic structural diagram of a vehicle according to an embodiment of the present disclosure;
FIG. 2 is a schematic structural diagram of a bottom support apparatus according to another embodiment of the present disclosure;
FIG. 3 is a schematic enlarged view of part A in FIG. 2;
FIG. 4 is a schematic flowchart of a method for changing a bottom support apparatus type according to an embodiment of the present disclosure;
FIG. 5 is a schematic flowchart of a method for changing a bottom support apparatus type according to another embodiment of the present disclosure; and
FIG. 6 is a schematic flowchart of a method for changing a bottom support apparatus type according to still another embodiment of the present disclosure.

Description of the reference numerals:
vehicle 1000; battery 100; controller 200; motor 300; bottom support apparatus 1; bottom support set 11; bottom support plate 111; limiting part 1111; connecting part 1112; supporting part 1113; first rod 11131; second rod 11132; mounting stand 12; first mating hole 12a; type change mechanism 13; first locking member 131; adjusting member 132; limiting groove 132a; mounting port 132b; connecting plate 1321; moving plate 1322; second locking member 133; position detecting member 14; iron piece 15; first cylinder 16; first platy member 17; second platy member 18; third platy member 19; second cylinder 20.

### DETAILED DESCRIPTION

The following describes in detail embodiments of technical solutions of the present disclosure with reference to the accompanying drawings. The following embodiments are merely intended for clearer description of the technical solutions of the present disclosure and therefore are used as just examples, which do not constitute any limitations on the protection scope of the present disclosure.

Unless otherwise defined, all technical and scientific terms used herein have the same meaning as commonly understood by those skilled in the art to which the present disclosure relates. The terms used herein are intended to merely describe the specific embodiments, rather than to limit the present disclosure. The terms "include", "comprise", "have", and "provided with", and any other variations thereof in this specification and the description of the drawings of the present disclosure are intended to cover non-exclusive inclusions.

In the description of the embodiments of the present disclosure, the technical terms "first", "second", "third", and the like are merely intended to distinguish different objects and should not be understood as any indication or implication of relative importance or any implicit indication of the number, specific sequence, or primary-secondary relationship of the technical features indicated.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

The present disclosure is described in detail below.

A bottom support apparatus 1 according to the embodiments of the present disclosure is configured to protect the bottom of a battery module. To make the bottom support apparatus 1 according to the present disclosure more comprehensible, the battery module according to the present disclosure is described first before the bottom support apparatus 1 according to the present disclosure is described.

Batteries are increasingly widely used in life and industry. Batteries are not only applied in energy storage power systems such as hydropower, thermal power, wind power, and solar power stations, but are also widely applied in vehicles, for example, electric transportation vehicles such as electric bicycles, electric motorcycles, or electric vehicles, as well as in aerospace and other fields.

The battery according to the embodiments of the present disclosure may be used in, but is not limited to, electric devices such as energy storage power systems, vehicles, ships, or aircraft.

The battery according to the embodiments of the present disclosure may further be used as a battery module including a plurality of battery cells. The battery module may also be used in, but is not limited to, electric devices such as energy storage power systems, vehicles, ships, or aircraft. The battery module can be used to provide higher total energy. Moreover, the battery module is formed by arranging a plurality of grouped battery cells in a sealed case, thereby providing more reliable dustproof and waterproof performance. Therefore, the battery module can be applied to harsher and more humid environments, even in submerged usage scenarios.

The embodiments of the present disclosure provide an electric device including the above battery or battery module configured to provide electric energy. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present disclosure is illustrated by taking a vehicle 1000 as an example of the electric device according to an embodiment of the present disclosure. Descriptions are provided below with reference to the drawings.

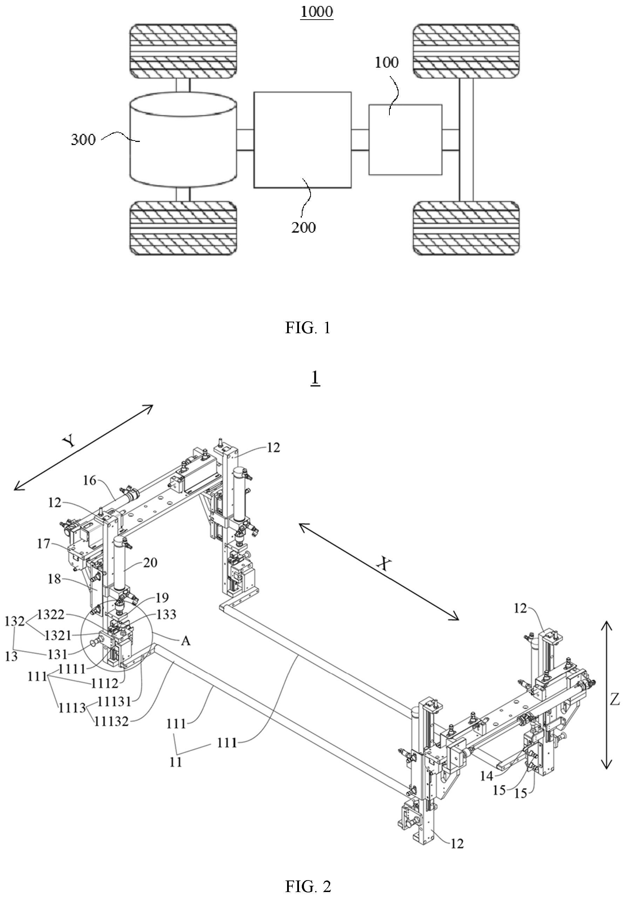

FIG. 1 is a schematic structural diagram of a vehicle 1000 according to some embodiments of the present disclosure. The vehicle 1000 may be a fuel vehicle, a gas vehicle, or a new energy vehicle. The new energy vehicle may be a pure electric vehicle, a hybrid vehicle, an extended-range vehicle, or the like. As shown in FIG. 1, a battery 100 is provided inside the vehicle 1000, and the battery 100 may be provided at the bottom of the vehicle 1000, or at the front or the tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present disclosure, the battery 100 may not only serve as an operation power source for the vehicle 1000, but also as a driving power source for the vehicle 1000 to, instead of or in part instead of fuel or natural gas, provide driving power for the vehicle 1000.

A battery module includes at least one battery cell. The battery cell is an energy storage component of the battery 100. The battery module includes a battery monitoring and management device configured to monitor the power level and the like of the battery cell. Battery modules are packaged to form a battery pack.

In the battery 100, there may be a plurality of battery cells, and the plurality of battery cells may be connected in series, in parallel, or in series-parallel. The series-parallel connection means that both series connection and parallel connection are present for the connection among the plurality of battery cells. The plurality of battery cells may be directly connected in series, in parallel, or in series-parallel. Certainly, in the battery 100, the plurality of battery cells may be first connected in series, in parallel, or in series-parallel, to form battery modules, and then the plurality of battery modules are connected in series, in parallel, or in series-parallel, to form a whole.

The battery 100 may further include other structures. For example, the battery 100 may further include a busbar component configured to achieve the electrical connection between the plurality of battery cells.

In the embodiments of the present disclosure, the battery cell may be a secondary battery. The secondary battery refers to a battery cell that can continue to be used by activating an active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

The battery cell may be a cylindrical battery cell, a prismatic battery cell, or a battery cell of other shapes. The prismatic battery cell includes a square-shell battery cell or a polygonal prismatic battery cell. The polygonal prismatic battery cell may be, for example, a hexagonal prismatic battery cell. This is not particularly limited in the present disclosure.

Illustratively, the battery cell includes a top cover, a housing, an electrode assembly, an electrolyte, and an insulating film. The top cover and the housing are configured to encapsulate components such as the electrode assembly and the electrolyte. The top side of the housing is provided with a communication port, the electrode assembly and the electrolyte are placed inside the case, and the communication port of the housing is lidded with the top cover. The outer surface of the housing is coated with the insulating film. The insulating film is used for insulation, and can further protect the surface of the housing from being scratched.

The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the electrode assembly is provided with tabs that can conduct current out from the electrode assembly. The tabs include a positive electrode tab and a negative electrode tab.

In some embodiments, at least one electrode terminal is disposed on the housing or the top cover, and the electrode terminal is electrically connected to the tabs. The electrode terminal may be directly connected to the tabs or may be indirectly connected to the tabs through an adapting part. The electrode terminal may be disposed on the top cover, or may be disposed on the housing.

Mixed-line production means that battery modules of different models are produced and assembled on the same production line. The battery modules of different models include different shapes of the bottoms of the battery modules and/or different overall dimensions of the battery modules. Illustratively, the different overall dimensions of the battery modules may mean different three-dimensional dimensions of the battery modules.

In the related art, a bottom support plate is usually fixed onto a mounting stand, making it difficult to replace the bottom support plate and adjust the position thereof, and therefore, the mixed-line production of battery modules of different models is difficult to realize.

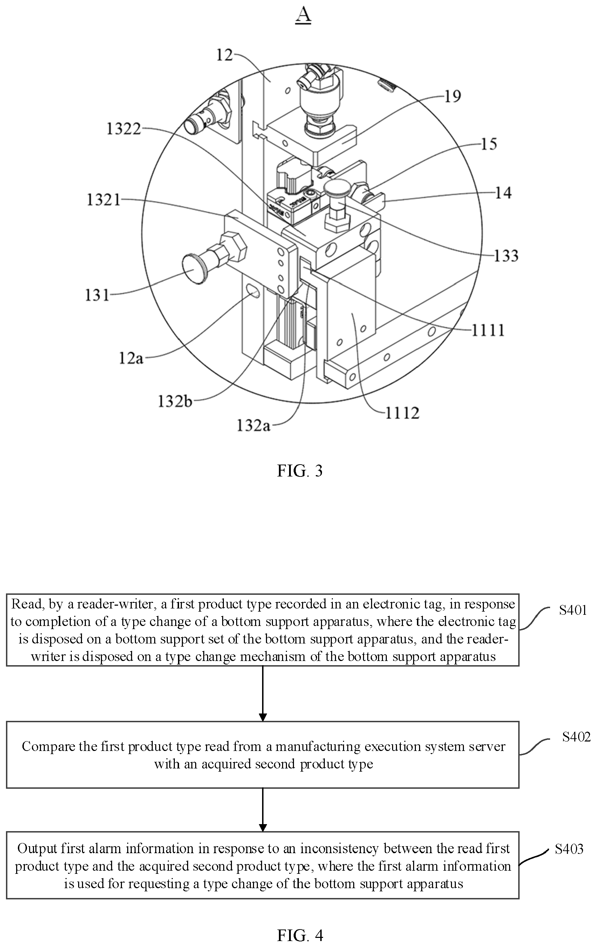

The embodiments of the present disclosure provide a bottom support apparatus 1. Referring to FIGs. 2 and 3, the bottom support apparatus 1 includes a bottom support set 11, a plurality of mounting units, and a plurality of type change mechanisms 13. One mounting unit includes two mounting stands 12 spaced apart from each other along a first direction, and the plurality of mounting units are spaced apart from each other along a second direction.

The bottom support set 11 includes a plurality of bottom support plates 111, the plurality of bottom support plates 111 are spaced apart from each other along the second direction, and each bottom support plate 111 corresponds to two mounting stands 12 of one mounting unit.

Two ends of each bottom support plate 111 along the first direction are each detachably connected to one type change mechanism 13, and the type change mechanism 13 is capable of being detachably connected to the mounting stand 12, where the first direction is perpendicular to the second direction.

In the bottom support apparatus 1 according to the present disclosure, the plurality of bottom support plates 111 are spaced apart from each other along the second direction, and each bottom support plate 111 corresponds to two mounting stands 12 of one mounting unit. In this way, the bottom of a battery module can be supported in the first direction and the second direction, thereby preventing a case in which the battery module falls off when being moved. This can protect the battery module assembly to some extent and achieve high safety. Two ends of each of the bottom support plates 111 are each detachably connected to one type change mechanism 13, and the type change mechanism 13 is detachably connected to the mounting stand. In this way, in the mixed-line production of battery modules of different models, for the incoming materials of the battery modules of different models, the positions of the type change mechanisms 13 on the mounting stands 12 may be changed to support the bottoms of the battery modules of different models according to the present disclosure; the bottom support set 11 may be replaced to adapt to the battery modules of different models; or the type change mechanism 13 may be connected to a corresponding position and combined with the replacement of different bottom support plates 111, enabling adaptation to the battery modules of different models, which is convenient and flexible.

It should be noted that, "upper" refers to a direction toward the ceiling, and "lower" refers to a direction opposite to "upper". The first direction, the second direction, and the upper-lower direction are perpendicular to each other, and the three directions together form a three-dimensional vertical coordinate system. The first direction may be a direction X in FIG. 2, the second direction may be a direction Y in FIG. 2, and the upper-lower direction may be a direction Z in FIG. 2.

In some embodiments, the shapes of the bottom support plates 111 of the same bottom support set 11 may be the same, and the shapes of the bottom support plates 111 of different bottom support sets 11 may be different. In this way, the bottom support set 11 may be replaced to adapt to battery modules with different bottom shapes.

Illustratively, in an embodiment, the shape of the mounting stand 12 is not limited. For example, the mounting stand 12 may be a rectangular plate that extends along the upper-lower direction.

It should be noted that, in the embodiments of the present disclosure, "a plurality of" includes a quantity of two or more.

Illustratively, in an embodiment, referring to FIG. 2, the number of the mounting stands 12 is not limited. For example, there may be four mounting stands 12. Two mounting stands 12 are spaced apart from each other along the first direction to form one mounting unit, and two mounting units are spaced apart from each other along the second direction, such that the four mounting stands 12 substantially define, in an enclosing manner, a hexahedral space.

Illustratively, in an embodiment, referring to FIG. 2, the number of the bottom support plates 111 is not limited. For example, there may be two bottom support plates 111. The two bottom support plates 111 are spaced apart from each other along the second direction, and two ends of each bottom support plate 111 each correspond to one mounting stand 12. In this way, the bottom of a battery module can be supported at two positions along the second direction, thereby achieving high stability.

Illustratively, in an embodiment, referring to FIG. 2, the number of the type change mechanisms 13 is not limited. For example, there may be four type change mechanisms 13. Two ends of each bottom support plate 111 along the first direction are each provided with one type change mechanism 13. In this way, the two bottom support plates 111 can be connected to the four mounting stands 12 through the four type change mechanisms 13, to stably support the bottom of the battery module.

In an embodiment, the mounting stand is provided with a plurality of locking positions and/or a plurality of bottom support sets are provided, and the type change mechanism is capable of being detachably connected to the locking position of the mounting stand.

In this way, in the mixed-line production of battery modules of different models, for the incoming materials of the battery modules of different models, the locking positions of the type change mechanisms on the mounting stands may be changed to support the bottoms of the battery modules of different models according to the present disclosure; different bottom support sets may be replaced to adapt to the battery modules of different models; or the type change mechanism may be connected to a corresponding locking position and combined with the replacement of different bottom support sets, enabling adaptation to the battery modules of different models, which is convenient and flexible.

In an embodiment, the plurality of locking positions are spaced apart from each other along the upper-lower direction. In this way, the type change mechanism 13 is connected to the corresponding locking position, to adapt to the battery modules of different heights along the upper-lower direction.

Illustratively, in an embodiment, the locking position is not limited. For example, there are two locking positions, and the two locking positions are spaced apart from each other along the upper-lower direction. It can be understood that the number of the locking positions may alternatively be three, four, five, or the like.

In an embodiment, referring to FIGs. 2 and 3, the type change mechanism 13 includes a first locking member 131 and an adjusting member 132, a first locking hole is formed on the adjusting member 132, a first mating hole 12a is formed on the mounting stand 12 at the locking position, and the first locking member 131 is provided in the first locking hole and the first mating hole 12a in a penetrating manner to detachably connect the adjusting member 132 to the locking position. The detachable connection is achieved by using the first locking member 131, the first locking hole, and the first mating hole 12a, so that the structure is simple and easy to implement.

Illustratively, in an embodiment, referring to FIG. 2, the plurality of locking positions correspond to a plurality of first mating holes 12a, the plurality of first mating holes 12a are spaced apart from each other along the upper-lower direction, and there may be one first locking hole. In this way, when the bottoms of the battery modules of different heights along the upper-lower direction need to be supported, a corresponding locking position may be first determined, and then the first locking member 131 is disengaged from the first locking hole and the first mating hole 12a at the current locking position, followed by moving the type change mechanism 13 and the bottom support plate 111 connected to the type change mechanism 13 synchronously along the upper-lower direction to the first mating hole 12a at the corresponding locking position. Finally, the first locking member 131 is provided in the first locking hole and the first mating hole 12a at the corresponding locking position in a penetrating manner. In this way, the type change for bottom supporting is completed.

It should be noted that, since the same bottom support plate 111 is connected to two mounting stands 12 through two type change structures, two corresponding first locking members 131 on the same bottom support plate 111 may be pulled out simultaneously, to prevent the bottom support plate 111 from deformation when a single type change mechanism 13 is being adjusted.

Illustratively, in an embodiment, referring to FIGs. 2 and 3, the adjusting member 132 includes a connecting plate 1321 and a moving plate 1322. The first locking hole is formed on the connecting plate 1321, the connecting plate 1321 is connected to the moving plate 1322, the connecting plate 1321 is disposed on the side surface of the mounting stand 12 along the second direction, and the moving plate 1322 is disposed on the side surface of the mounting stand 12 along the first direction, such that the entire adjusting member 132 is substantially L-shaped.

In an embodiment, the first locking member 131 is a pin, the first locking hole and the first mating hole 12a both extend along the second direction, and the first locking member 131 is inserted into the first locking hole and the first mating hole 12a along the second direction. In this way, by pulling the pin along the second direction, the pin can be pulled out of the first locking hole and the first mating hole 12a at the current locking position, and then the type change mechanism 13 and the bottom support plate 111 connected to the type change mechanism 13 are synchronously moved along the upper-lower direction to the first mating hole 12a at a corresponding locking position. Subsequently, the pin may be inserted into the first locking hole and the first mating hole 12a at the corresponding locking position. In this way, by inserting and pulling out the pin, the rapid type change can be achieved without stopping the line, adapting to the battery modules of different heights along the upper-lower direction, with high efficiency and low cost.

Illustratively, in an embodiment, a slide rail is formed on one of the moving plate 1322 and the mounting stand 12, and a slide block is formed on the other of the moving plate 1322 and the mounting stand 12. The slide block is in sliding fit with the slide rail, and the slide rail extends along the upper-lower direction. For example, the slide block is formed on the side surface of the mounting stand 12 proximal to the moving plate 1322, and the slide rail is formed on the side surface of the moving plate 1322 proximal to the mounting stand 12. In this way, when the pin is pulled along the second direction out of the first locking hole and the first mating hole 12a at the current locking position, the movement along the upper-lower direction can be realized through the sliding fit between the slide rail and the slide block. In one aspect, the slide rail can provide a steady and accurate movement path, and the slide block can easily slide on the slide rail, so that the entire movement process is more accurate and controllable. In another aspect, the slide rail can provide additional support and stability to prevent the problem that the slide block wobbles or slides unstably during the movement process. Moreover, with the slide rail and the slide block used together, operators can directly control the moving direction and speed of the slide rail or the slide rail for fast and accurate movement to the corresponding locking position.

Illustratively, in an embodiment, the type change mechanism 13 includes a spring. The spring is sleeved on the pin, a portion of the pin sleeved with the spring is disposed in the first locking hole, and the diameter of the spring is greater than the diameter of the first locking hole. In this way, when the pin is pulled along the second direction and is disengaged from the first mating hole 12a, the pin drives the spring to move, while the spring cannot pass through the first locking hole, such that the spring is pressed against the circumferential wall of the first locking hole, and in this case, the spring is pressed and deformed to store elastic potential energy. When the type change mechanism 13 moves to the corresponding locking position, the pin is released, and the spring recovers from the deformation to convert the elastic potential energy into kinetic energy to push the pin to be inserted into the first mating hole 12a at the corresponding locking position. In this way, there is no need to pull the pin out of the first locking hole and search for the pin each time, achieving convenient operations, thereby further saving the time required for the type change.

In an embodiment, the type change mechanism 13 includes a second locking member 133 and an adjusting member 132, a second locking hole is formed on the adjusting member 132, a second mating hole is formed on one end of the bottom support plate 111 along the upper-lower direction, and the second locking member 133 is provided in the second locking hole and the second mating hole in a penetrating manner to detachably connect the bottom support plate 111 to the adjusting member 132.

Illustratively, the second locking hole may be formed on the moving plate 1322. When the bottom support plate 111 needs to be replaced to adapt to the battery modules of different models, a corresponding bottom support plate 111 may be first determined, then the second locking member 133 is disengaged from the second locking hole and the second mating hole on the current bottom support plate 111, and the current bottom support plate 111 is removed and replaced with the corresponding bottom support plate 111. Finally, the second locking member 133 is provided in the second locking hole and the second mating hole on the corresponding bottom support plate 111 in a penetrating manner. In this way, the bottom support plate 111 can be replaced quickly, thereby achieving high efficiency.

It should be noted that, since the same bottom support plate 111 is connected to two mounting stands 12 through two type change structures, two corresponding second locking members 133 on the same bottom support plate 111 may be pulled out simultaneously, to prevent the bottom support plate 111 from deformation when a single type change mechanism 13 is being adjusted.

In an embodiment, the second locking member 133 is a pin, the second locking hole and the second mating hole both extend along the upper-lower direction, and the second locking member 133 is inserted into the second locking hole and the second mating hole from top to bottom.

Illustratively, the second locking hole may be formed on the top side surface of the moving plate 1322. In this way, when the bottom support plate 111 needs to be replaced, by pulling the pin upwards, the pin may be pulled out of the second locking hole and the second mating hole on the current bottom support plate 111, and then the current bottom support plate 111 is removed and replaced with a corresponding bottom support plate 111. Finally, the pin is inserted downwards into the second locking hole and the second mating hole on the corresponding bottom support plate 111. In this way, by inserting and pulling out the pin, the rapid type change can be achieved without stopping the line, adapting to the battery modules of different models, with high efficiency.

Illustratively, in an embodiment, the type change mechanism 13 includes a spring. The spring is sleeved on the pin, a portion of the pin sleeved with the spring is disposed in the second locking hole, and the outer diameter of the spring is greater than the diameter of the second locking hole. In this way, when the pin is pulled upwards and is disengaged from the second mating hole, the pin drives the spring to move, while the spring cannot be disengaged from the second locking hole, such that the spring is pressed against the circumferential wall of the second locking hole, and the spring is pressed and deformed to store elastic potential energy. When the corresponding bottom support plate 111 is used by replacement, the pin is released, and the spring recovers from the deformation to convert the elastic potential energy into kinetic energy to push the pin to be inserted into the second mating hole on the corresponding bottom support plate 111. In this way, there is no need to pull the pin out of the second locking hole and search for the pin each time, achieving convenient operations, thereby further saving the time required for the type change.

In an embodiment, referring to FIG. 3, a limiting groove 132a is formed on the adjusting member 132, the end part of the bottom support plate 111 along the first direction is configured as a limiting part 1111 provided with the second mating hole, the limiting part 1111 is located within the limiting groove 132a and abuts against the lower surface of the limiting groove 132a, and the second locking hole is located above the limiting groove 132a and is in communication with the limiting groove 132a.

Illustratively, referring to FIGs. 2 and 3, the bottom support plate 111 includes the limiting part 1111, a connecting part 1112, and a supporting part 1113. The second mating hole is formed on the limiting part 1111, the connecting part 1112 extends along the upper-lower direction, the connecting part 1112 connects the limiting part 1111 and the supporting part 1113, the supporting part 1113 is configured to support the battery module, the limiting groove 132a is formed on the side surface of the moving plate 1322 proximal to the limiting part 1111, the second locking hole is formed on the top side surface of the moving plate 1322, and the second locking hole is in communication with the limiting groove 132a.

Herein, when the bottom support plate 111 needs to be replaced, the pin may be pulled out upwards, and then the limiting part 1111 on the current bottom support plate 111 is taken out from the limiting groove 132a. Subsequently, the limiting part 1111 on a corresponding bottom support plate 111 is placed in the limiting groove 132a, thereby completing the pre-mounting and pre-positioning of the bottom support plate 111. In this way, in one aspect, the limiting groove 132a and the limiting part 1111 can achieve precise positioning during the connection process, such that offsets or misalignments are prevented, and the pin can be aligned with and inserted into the second mating hole more easily, thereby reducing the time for replacing the bottom support plate 111, and achieving the rapid type change of the bottom support plate 111; in another aspect, the limiting fit between the limiting groove 132a and the limiting part 1111 can provide additional support and fixation, thereby reducing the problem of loosening or swinging of the bottom support plate 111 when supporting the bottom of a battery module, and achieving high operation stability.

Illustratively, in an embodiment, referring to FIG. 2, the supporting part 1113 includes a first rod 11131 and a second rod 11132. One end of the first rod 11131 is connected to one side of the connecting part 1112 distal to the limiting part 1111, the other end of the first rod 11131 is connected to the second rod 11132, and the first rod 11131 extends along the second direction, such that the entire supporting part 1113 is substantially L-shaped. This can increase the supporting surface for the battery module, and prevent the battery module from falling off when moving.

In an embodiment, referring to FIG. 3, a mounting port 132b in communication with the limiting groove 132a is formed on one side surface of the adjusting member 132 along the second direction, and the limiting part 1111 enters the limiting groove 132a along the second direction through the mounting port 132b. In this way, when the bottom support plate 111 needs to be replaced, the limiting part 1111 may be inserted into the limiting groove 132a from the mounting port 132b in a guiding manner, and after the limiting part is inserted in place, the second mating hole is aligned with the second locking hole and the pin. In this case, the pin can be directly inserted into the second mating hole to complete the mounting of the bottom support plate 111, so that the replacement speed of the bottom support plate 111 is further increased, achieving high efficiency.

In an embodiment, referring to FIGs. 2 and 3, the bottom support apparatus 1 includes a position detecting member 14, the position detecting member 14 is disposed on the mounting stand 12, and the position detecting member 14 is configured to detect the locking position at which the type change mechanism 13 is located.

Illustratively, the position detecting member 14 may be a photoelectric sensor, and the photoelectric sensor may be disposed on the side surface of the mounting stand 12 facing away from the first mating hole 12a, to prevent interference with the type change mechanism 13 during the movement along the upper-lower direction. The number of the photoelectric sensors is not limited. For example, one photoelectric sensor is disposed at a corresponding position of each first mating hole 12a. The bottom support apparatus 1 includes an iron piece 15, and the iron piece 15 may be disposed on the side surface of the moving plate 1322 distal to the mounting port 132b. When the type change mechanism 13 and the bottom support plate 111 connected to the type change mechanism 13 are synchronously moved along the upper-lower direction to the first mating hole 12a at the corresponding locking position, whether the bottom support apparatus is moved to the original position may be determined based on whether the iron piece 15 on the moving plate 1322 blocks the position detecting member 14 corresponding to the first mating hole 12a at the corresponding locking position. If the iron piece 15 blocks the corresponding position detecting member 14, the position detecting member 14 sends sensed information about being blocked in the form of a position detection result to a control device, to output second alarm information. In this case, the first locking member 131 may be directly provided in the first locking hole and the first mating hole 12a at the corresponding locking position in a penetrating manner. In this way, the safety detection for the type change for bottom supporting can be achieved, thereby preventing incorrect changes, and improving the accuracy of the type change for bottom supporting.

Illustratively, the second reminder information may be a text-based broadcast, a light reminder, and/or a text notification.

In an embodiment, the bottom support apparatus 1 may further include a reader-writer and an electronic tag, the reader-writer is disposed in the type change mechanism 13, the electronic tag is disposed in the bottom support plate 111, and the reader-writer can read from and write to the electronic tag.

Illustratively, the reader-writer may be disposed in the moving plate 1322, and the electronic tag may be disposed in the limiting part 1111. Herein, when the limiting part 1111 on the bottom support plate 111 is inserted into the limiting groove 132a, the reader-writer can identify the electronic tag in the limiting part 1111, to determine the model of the bottom support plate 111. In this way, the safety detection for replacing the bottom support plate 111 can be achieved, thereby preventing incorrect changes, and improving the accuracy for replacing the bottom support plate 111.

Illustratively, the radio frequency identification (RFID) technology is used for wireless communication between the electronic tag and the reader-writer. In this way, the reader-writer can perform identification without contacting the bottom support plate 111, and a large amount of information, for example, the manufacturer, the batch number, the model, and the overall dimension of the bottom support plate 111, can be stored by using an RFID chip. The information can be easily read, updated, and managed, thereby providing convenience for product updates.

In an embodiment, referring to FIG. 2, the bottom support apparatus 1 includes a first cylinder 16, a first platy member 17, and a second platy member 18. The second platy member 18 is slidably connected to the mounting stand 12 along the upper-lower direction, and two ends of the first cylinder 16 are respectively connected to second platy members 18 of the two mounting stands 12 spaced apart from each other along the second direction. The second platy member 18 is slidably connected to the first platy member 17 along the second direction, the piston rod of the first cylinder 16 extends or retracts, and the two mounting stands 12 can move relative to or toward each other along the second direction.

In an embodiment, referring to FIG. 2, the bottom support apparatus 1 includes a second cylinder 20 and a third platy member 19. The second cylinder 20 is disposed along the upper-lower direction and connected to the second platy member 18, and the third platy member 19 is disposed on the mounting stand 12 and located below the second cylinder 20. The piston rod of the second cylinder 20 is connected to the third platy member 19, the piston rod of the second cylinder 20 extends or retracts, and the mounting stand 12 can move along the upper-lower direction.

The embodiments of the present disclosure further provide a grabbing device. The grabbing device includes a gripper and the bottom support apparatus 1 according to any one of the embodiments of the present disclosure. The gripper is configured to be capable of grabbing or releasing a battery module, and the bottom support apparatus can support the bottom of the battery module in a state where the gripper grabs the battery module. After the gripper grabs the battery module, the second cylinder 20 drives the piston rod thereof to extend, and the mounting stands 12 move downwards, until the bottom support plate 111 stops below the battery module along the upper-lower direction. Then, the first cylinder 16 drives the piston rod thereof to retract, such that the mounting stands 12 spaced apart from each other along the second direction move toward each other, until the two bottom support plates 111 stop directly below the battery module. In this way, the grabbing and bottom support operations for the battery module are completed.

The embodiments of the present disclosure further provide a material grabbing robot. The material grabbing robot includes a robot body and the grabbing device according to any one of the embodiments of the present disclosure, and the robot body is configured to be capable of driving the grabbing device to rotate and/or move. In this way, when the battery module is to be grabbed, the robot body can drive the grabbing device to move above the battery module, to grab the battery module by using the gripper. Then, the bottom support apparatus 1 supports the bottom of the battery module.

The embodiments of the present disclosure further provide a production line for producing batteries. The production line includes the grabbing device according to the above embodiments. On the production line according to some embodiments of the present disclosure, a battery module may be placed on a tray and conveyed to the subsequent processing position.

In addition, the production line may further include conveyor lines. The conveyor lines may include a conveyor line configured to convey the tray, and may further include a conveyor line configured to convey the battery module that is to be grabbed. The conveyor line for the battery module to be grabbed may convey the battery module to be grabbed to the vicinity of the grabbing device, and the battery module to be grabbed is grabbed by the gripper or the like and placed in the tray.

Illustratively, the conveyor line may be a conveyor belt, for example, may be a band-shaped object such as a belt, may be a plurality of roller shafts arranged side by side, or may be a plurality of chains.

On the production line, the battery module can be quickly grabbed and placed in an automated manner, achieving higher efficiency. In addition, as the battery module is placed in the tray, the battery module may be sent to the next treatment apparatus by using the tray directly.

Based on the above embodiments, the grabbing device may further be controlled by a control device. For example, the control device may be a programmable logic controller (PLC) device. Accordingly, the embodiments of the present disclosure further provide a method for changing a bottom support apparatus type, with the bottom support apparatus according to the above embodiments. The method is applied to the control device. As shown in FIG. 4, the method includes:
In step S401, a reader-writer reads a first product type recorded in an electronic tag, in response to completion of the type change of the bottom support apparatus, where the electronic tag is disposed on a bottom support set of the bottom support apparatus, and the reader-writer is disposed on a type change mechanism of the bottom support apparatus.
In step S402, the first product type read from a manufacturing execution system (MES) server is compared with an acquired second product type.
In step S403, first alarm information is output in response to an inconsistency between the read first product type and the acquired second product type, where the first alarm information is used for requesting a type change of the bottom support apparatus. The first alarm information may be a text-based broadcast, a light reminder, and/or a text notification.

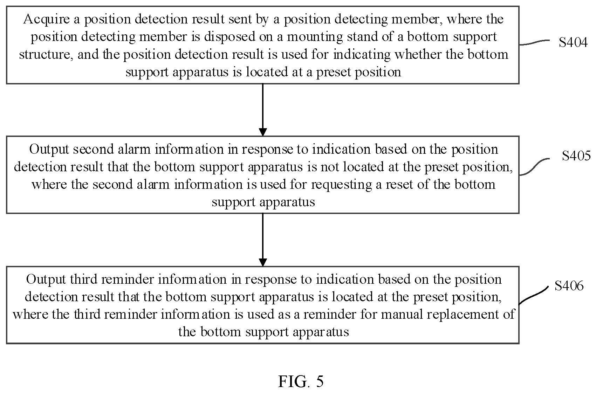

In some embodiments, as shown in FIG. 5, the method further includes:
In step S404, a position detection result sent by a position detecting member is acquired, where the position detecting member is disposed on a mounting stand of a bottom support structure, and the position detection result is used for indicating whether the bottom support apparatus is located at a preset position.
In step S405, second alarm information is output in response to indication based on the position detection result that the bottom support apparatus is not located at the preset position, where the second alarm information is used for requesting a reset of the bottom support apparatus.
In step S406, third reminder information is output in response to indication based on the position detection result that the bottom support apparatus is located at the preset position, where the third reminder information is used as a reminder for manual replacement of the bottom support apparatus.

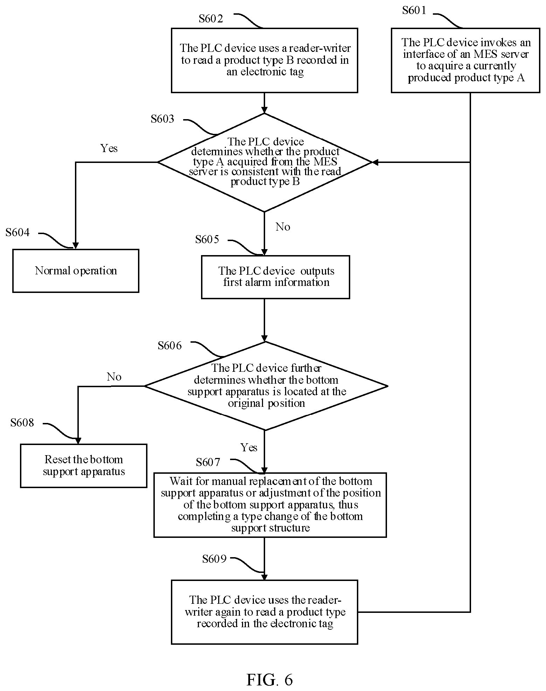

Based on the above embodiments, the embodiments of the present disclosure further provide a method for changing a bottom support apparatus type. As shown in FIG. 6, the method includes:
In step S601, a PLC device invokes an interface of an MES server to acquire a currently produced product type, for example, A.
In step S602, the PLC device uses a reader-writer to read a product type recorded in an electronic tag, for example, B.
In step S603, the PLC device determines whether the product type A acquired from the MES server is consistent with the read product type B.

If the types are consistent with each other, step S604 is performed next for normal operation. If the acquired product type A is inconsistent with the read product type B, step S605 is performed next. The PLC device outputs first alarm information, and the first alarm information is used for requesting a type change of the bottom support apparatus.

In some embodiments, the PLC device displays the alarm information, for example, the first alarm information and the second alarm information, on the HMI (Human Machine Interface) interface. After seeing the alarm information, the operator on the production line clears the alarm on the HMI interface upon confirming that the alarm should be cleared. In this way, the PLC device is informed that the corresponding alarm is cleared based on the operation of the operator contacting the alarm.

In step S606, after outputting the first alarm information, the PLC device further determines whether the bottom support apparatus is located at the preset position (whether the bottom support apparatus is at the original position).

In some embodiments, the position detecting member is configured to detect whether the bottom support apparatus is at the preset position, and send the detection result to the PLC device. If the bottom support apparatus is not located at the preset position, step S608 is performed next, and the PLC device outputs second alarm information. The second alarm information is used for requesting a reset of the bottom support apparatus, to ensure that the bottom support apparatus is located at the preset position. If the bottom support apparatus is located at the preset position, step S607 is performed next to wait for manual replacement of the bottom support apparatus or adjustment of the position of the bottom support apparatus, thus completing a type change of the bottom support structure.

In step S609, after the type change of the bottom support apparatus is completed, the PLC device reads a product type recorded in the electronic tag again, for example, C, and the PLC device determines whether the product type A acquired from the MES server is consistent with the read product type C. If the types are consistent with each other, the PLC device operates normally. If the acquired product type A is inconsistent with the read product type C, the PLC device outputs the first alarm information again, until the type change of the bottom support apparatus is successful.

It should be noted that, the PLC device may further control a driving apparatus in the grabbing device, such as a cylinder or a servo motor. For example, the PLC device may control a first cylinder and/or a second cylinder to start or stop working.

The above embodiments are only used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of this specification of the present disclosure. In particular, the technical features mentioned in the embodiments can be combined in any manner, provided that there is no structural conflict.

## Claims

1. A bottom support apparatus, comprising:
a plurality of mounting units, wherein one of the mounting units comprises two mounting stands spaced apart from each other along a first direction, and the plurality of mounting units are spaced apart from each other along a second direction;
a bottom support set, wherein the bottom support set comprises a plurality of bottom support plates, the plurality of bottom support plates are spaced apart from each other along the second direction, and each of the bottom support plates corresponds to two mounting stands of one of the mounting units; and
a plurality of type change mechanisms, wherein two ends of each of the bottom support plates along the first direction are each detachably connected to one of the type change mechanisms, and the type change mechanism is capable of being detachably connected to the mounting stand, wherein the first direction is perpendicular to the second direction.

2. The bottom support apparatus according to claim 1, wherein the mounting stand is provided with a plurality of locking positions and/or a plurality of bottom support sets are provided, and the type change mechanism is capable of being detachably connected to the locking position of the mounting stand.

3. The bottom support apparatus according to claim 2, wherein the plurality of locking positions are spaced apart from each other along an upper-lower direction.

4. The bottom support apparatus according to claim 2 or 3, wherein the type change mechanism comprises a first locking member and an adjusting member, a first locking hole is formed on the adjusting member, a first mating hole is formed on the mounting stand at the locking position, and the first locking member is provided in the first locking hole and the first mating hole in a penetrating manner to detachably connect the adjusting member to the locking position.

5. The bottom support apparatus according to claim 4, wherein the first locking member is a pin, the first locking hole and the first mating hole both extend along the second direction, and the first locking member is inserted into the first locking hole and the first mating hole along the second direction.

6. The bottom support apparatus according to any one of claims 1 to 5, wherein the type change mechanism comprises a second locking member and the adjusting member, a second locking hole is formed on the adjusting member, a second mating hole is formed on one end of the bottom support plate along the upper-lower direction, and the second locking member is provided in the second locking hole and the second mating hole in a penetrating manner to detachably connect the bottom support plate to the adjusting member.

7. The bottom support apparatus according to claim 6, wherein the second locking member is a pin, the second locking hole and the second mating hole both extend along the upper-lower direction, and the second locking member is inserted into the second locking hole and the second mating hole from top to bottom.

8. The bottom support apparatus according to claim 7, wherein a limiting groove is formed on the adjusting member, an end part of the bottom support plate along the first direction is configured as a limiting part provided with the second mating hole, the limiting part is located within the limiting groove and abuts against a lower surface of the limiting groove, and the second locking hole is located above the limiting groove and is in communication with the limiting groove.

9. The bottom support apparatus according to claim 8, wherein a mounting port in communication with the limiting groove is formed on one side surface of the adjusting member along the second direction, and the limiting part enters the limiting groove along the second direction through the mounting port.

10. The bottom support apparatus according to any one of claims 1 to 9, wherein the bottom support apparatus comprises a reader-writer and an electronic tag, the reader-writer is disposed in the type change mechanism, the electronic tag is disposed in the bottom support plate, and the reader-writer is capable of sensing and identifying the electronic tag.

11. The bottom support apparatus according to claim 2 or 3, wherein the bottom support apparatus comprises a position detecting member, the position detecting member is disposed on the mounting stand, and the position detecting member is configured to detect the locking position at which the type change mechanism is located.

12. A grabbing device, comprising a gripper and the bottom support apparatus according to any one of claims 1 to 11, wherein the gripper is configured to be capable of grabbing or releasing a battery module, and the bottom support apparatus is capable of supporting a bottom of the battery module in a state where the gripper grabs the battery module.

13. A production line for producing batteries, comprising the grabbing device according to claim 12.

14. A method for changing a bottom support apparatus type, applied to a control device, with the bottom support apparatus according to claim 1, the method comprising:
reading, by a reader-writer, a first product type recorded in an electronic tag, in response to completion of a type change of the bottom support apparatus, wherein the electronic tag is disposed on a bottom support set of the bottom support apparatus, and the reader-writer is disposed on a type change mechanism of the bottom support apparatus;
comparing the first product type read from a manufacturing execution system server with an acquired second product type; and
outputting first alarm information in response to an inconsistency between the read first product type and the acquired second product type, wherein the first alarm information is used for requesting a type change of the bottom support apparatus.

15. The method according to claim 14, wherein the method further comprises:
acquiring a position detection result sent by a position detecting member, wherein the position detecting member is disposed on a mounting stand of a bottom support structure, and the position detection result is used for indicating whether the bottom support apparatus is located at a preset position;
outputting second alarm information in response to indication based on the position detection result that the bottom support apparatus is not located at the preset position, wherein the second alarm information is used for requesting a reset of the bottom support apparatus; and
outputting third reminder information in response to indication based on the position detection result that the bottom support apparatus is located at the preset position, wherein the third reminder information is used as a reminder for manual replacement of the bottom support apparatus.
